(19) Europäisches Patentamt
European Patent Office
Office européen des brevets

(11) **EP 2 051 400 A2**

(12) **EUROPEAN PATENT APPLICATION**

(43) Date of publication:
**22.04.2009 Bulletin 2009/17**

(51) Int Cl.:
***H04B 7/04*** *(2006.01)*

(21) Application number: **08163447.9**

(22) Date of filing: **01.09.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **19.10.2007 GB 0720559**

(71) Applicant: **Fujitsu Ltd.**
**Kawasaki-shi, Kanagawa 211-8588 (JP)**

(72) Inventor: **Hunukumbure, Mythri**
**Hillingdon, UB8 3WF (GB)**

(74) Representative: **Wilding, Frances Ward**
**Haseltine Lake**
**Lincoln House**
**300 High Holborn**
**London WC1V 7JH (GB)**

(54) **MIMO wireless communication systems**

(57) There is provided a wireless communication method for use in a MIMO system, the system having a first cell adjacent to one or more second cells, each cell being served by a base station and having a plurality of fixed or mobile subscriber stations, and each base station having MIMO channels between its cell and each subscriber station in its cell, the method comprising: recognising an opportunity for a reduction of interference experienced between a particular subscriber station in a particular said second cell and the base station of the first cell; selecting as the basis of interference reduction a rank deficient MIMO channel amongst the MIMO channels between the base station of the first cell and each subscriber station in the first cell; and applying post-coding to transmissions on the selected MIMO channel, where the selected MIMO channel is an uplink channel, or on a MIMO uplink channel corresponding to the selected MIMO channel, where the selected MIMO channel is a downlink channel, to reduce the interference experienced by the base station of the first cell.

FIG. 9

## Description

The present invention relates to wireless communication systems, and more particularly to wireless communication systems having multiple-input, multiple-output (MIMO) capability, especially but not exclusively OFDMA systems including those compliant with the IEEE 802.16 standards. The entire contents of IEEE Std 802.16-2004 "Air Interface for Fixed Broadband Wireless Access Systems" and IEEE Std 802.16e-2005 "Amendment 2 and Corrigendum 1 to IEEE Std 802.16-2004" are hereby incorporated by reference.

Wireless communication systems are widely known in which a base station (BS) communicates with multiple subscriber stations (SS or MS, also called users) within range of the BS. The area covered by one BS is called a cell and typically, many base stations are provided in appropriate locations so as to cover a wide geographical area more or less seamlessly with adjacent cells. Each BS divides its available bandwidth, i.e. frequency and time resources, into individual resource allocations for the users. There is a constant need to increase the capacity of such systems in order to accommodate more users and/or more data-intensive services.

OFDM is one known technique for transmitting data in a wireless communication system. An OFDM (Orthogonal Frequency Division Multiplex)-based communications scheme divides data symbols to be transmitted among a large number of subcarriers (also called frequency fingers) which are equally spaced in frequency, hence frequency division multiplexing. By carrying only a small amount of data on each subcarrier, the bit rate per subcarrier is kept low and hence intersymbol interference is reduced. Data is modulated onto a subcarrier by adjusting its phase, amplitude, or both phase and amplitude.

The "orthogonal" part of the name OFDM refers to the fact that the spacings of the subcarriers are specially chosen so as to be orthogonal, in a mathematical sense, to the other subcarriers. More precisely, they are arranged along the frequency axis such that the sidebands of adjacent subcarriers are allowed to overlap but can still be received without inter-subcarrier interference, commonly referred to as ICI. In mathematical terms, the sinusoidal waveforms of each subcarrier are called eigenfunctions of a linear channel, with the peak of each sinusoid coinciding with a null of every other sinusoid. This can be achieved by making the subcarrier spacing a multiple of the reciprocal of the symbol period.

When individual subcarriers or sets of subcarriers are assigned to different users of the wireless communication system, the result is a multi-access system referred to as OFDMA. In this specification, the term OFDM is henceforth used to include OFDMA. By assigning distinct frequency/time resources to each user in a cell, OFDMA can substantially avoid interference among the users within a cell. However, interference from adjacent cells can still be a problem as explained later.

A further modification of the basic OFDM scheme is called MIMO OFDM, where MIMO stands for multiple-input multiple-output. This scheme employs multiple antennas at both the transmitter and the receiver to enhance the data capacity achievable between the BS and each user. For example, a 4x4 MIMO channel is one in which transmitter and receiver communicate with one another each using four antennas. There is no need for the transmitter and receiver to employ the same number of antennas.

Typically, a base station in a wireless communication system will be equipped with many more antennas in comparison with a mobile handset, owing to differences in power, cost and size limitations.

Considering the simplest example of a transmitter (e.g. base station) communicating with a single receiver (subscriber station), the MIMO channel is the frequency (or equivalently time delay) response of the radio link between the transmitter and receiver. It contains all the sub-carriers, and covers the whole bandwidth of transmission. A MIMO channel contains many individual radio links hence it has Nt x Nr SISO channels (also called sub-channels). For example, a 2x2 MIMO arrangement contains 4 links, hence it has 4 SISO channels. The SISO channels can be combined in various ways to transmit one or more data streams to the receiver.

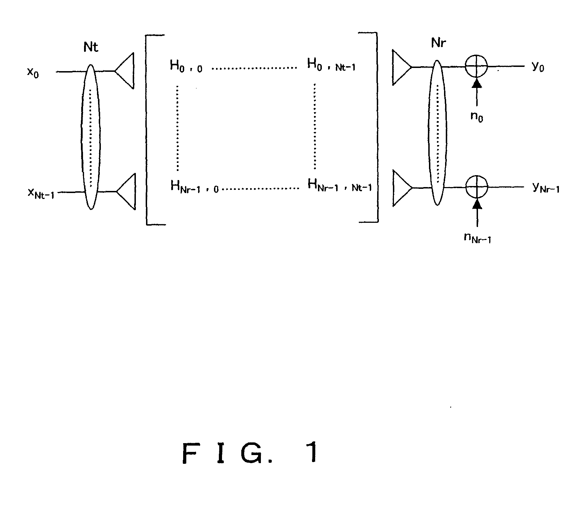

Fig. 1 is a conceptual diagram of a generalized MIMO system. In Fig.1, a transmitter transmits signals utilizing Nt transmitting antennas, and the receiver receives the signals from the transmitter utilizing Nr receiving antennas. The characteristics of the individual SISO channels or subchannels between the transmitter and receiver are denoted by $H_{0,0}$ to $H_{Nr-1, Nt-1}$, and as indicated in the Figure, these form terms of a matrix called the channel matrix or channel response matrix H. "$H_{0,0}$" indicates the channel characteristics (for example, channel frequency response) for transmitting signals from the transmitting antenna 0 to the receiving antenna 0. "$H_{Nr-1, Nt-1}$" indicates the channel characteristics for transmitting signals from the transmitting antenna Nt-1 to the receiving antenna Nr-1, and so on. Since the receiving antennas are not individually addressable by the transmitter, there are a maximum of $N_t$ data streams.

In Fig. 1, the symbols $X_0$ to $X_{Nt-1}$, which are transmitted using the transmitting antennas $N_0$ to $N_{Nt-1}$, form a transmit vector x. Likewise, received signals $y_0$ to $y_{Nr-1}$, which are received using the receiving antennas $N_0$ to $N_{Nr-1}$, together form a received signal vector y. Without precoding (see below), the vectors y and x are related by:

$$y = H.x + n \qquad\qquad (1)$$

where H is the channel matrix and n is a term representing noise in each receiving antenna.

The channel matrix H has a rank which is the number of independent rows or columns. When some of the rows or columns are mutually-dependent (indicating correlation between the individual subchannels) the MIMO channel is called "rank deficient". In such a case, the MIMO channel is incapable of providing the maximum data throughput due to correlation.

MIMO transmission schemes include so-called non-adaptive and adaptive configurations. In the non-adaptive case, the transmitter does not have any knowledge of the channel properties and this limits performance, as the transmitter cannot take account of changes in conditions (channel profile). Adaptive schemes rely on the receiver feeding back information (channel-state information or CSI) to the transmitter, or locally deriving the CSI, allowing it to adapt the transmitted signal to changing conditions and maximise data throughput. A feedback path (not shown) from the receiver to the transmitter carries the feedback signals for informing the transmitter of the channel properties.

Closed-loop systems are required in FDD (Frequency Division Duplex) systems, where the uplink (mobile to base station) and downlink (vice-versa) employ two different carrier frequencies. Because of the frequency change, the uplink and downlink channels are different and CSI needs to be fed back. In TDD (Time Division Duplex) systems the uplink and downlink are transmitted in two adjacent time slots on the same frequency. The two time slots are within the channel coherence time (the channel does not change) so the channel state information need not be fed back. The transmitter can estimate the channel from the received signal on the reverse link, usually aided by the insertion of pilots or known waveforms by the transmitter into the signal sent on the reverse link.

The invention to be described is applicable to both TDD and FDD systems, and is concerned with both the downlink (namely transmissions from a base station acting as the transmitter to its users acting as receivers) and the uplink (namely transmissions from users acting as transmitters to their base station acting as a receiver), although primarily with the uplink.

Typically, MIMO configurations involve pre-coding at the transmitter, whereby the data symbols to be transmitted are weighted using eigenvectors of each subcarrier, subchannel or subchannel group. In other words, channel-state information is used to adapt the transmit vector x to the channel conditions. This effectively allows the MIMO channel to be decomposed into a set of parallel SISO channels, so-called eigenmode signalling, so that the symbols are (given perfect channel-state information) perfectly separated at the receiver. The eigenmodes available in the channel are also called spatial modes. However, the pre-coding weight of each frequency band or group of subchannels needs to be constantly updated. The optimal or preferred width of this band or group of subchannels is dependent upon the coherence bandwidth of the spatial modes of the MIMO channel. Calculation of this coherence bandwidth is based on obtaining the eigenvalues from the MIMO channel matrices across the OFDM frequency spectrum. Precoding can be either linear, achieving reasonable results whilst limiting the complexity of processing, or non-linear, achieving near-optimal results but at the cost of greater complexity. One form of linear precoding is so-called "zero-forcing" as referred to below.

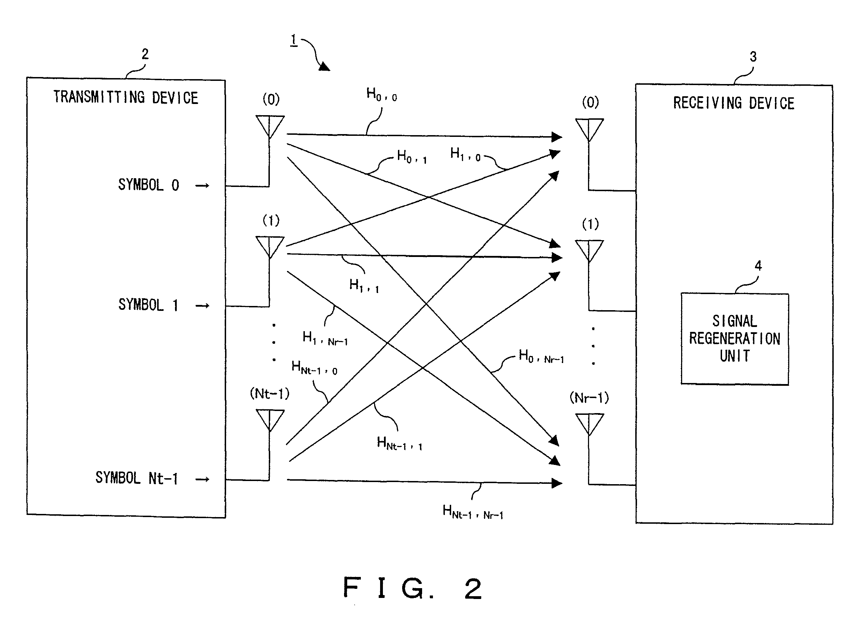

Fig. 2 is a diagram showing the configuration of a MIMO system in more concrete terms. MIMO system 1 comprises a transmitter 2 which comprises a plurality of transmitting antennas and a receiver 3 which comprises a plurality of receiving antennas.

The transmitter 2 transmits symbols 0 to Nt - 1 in parallel using Nt transmitting antennas; the symbols can be created from one data stream, referred to as vertical encoding, or different data streams, referred to as horizontal encoding. In addition, each transmitted symbol corresponds to, for example, one-bit data if the modulation method is BPSK, and corresponds to two-bit data if the modulation method is QPSK. The receiver 3 receives the signals transmitted from the transmitting device 2 using Nr receiving antennas, and it comprises a signal regeneration unit 4 which regenerates the transmitted symbols from the signals received. In this configuration, a number of spatial modes is available corresponding to the minimum value of Nt and Nr.

As indicated by the arrows in Figure 2, the signals transmitted from each of the plurality of transmitting antennas are received by each of the plurality of receiving antennas, giving rise to Nt x Nr subchannels in total. In other words, the signals transmitted from the transmitting antenna (0) are received by receiving antennas (0) through (Nr - 1), and likewise, the signals transmitted from the transmitting antennas (Nt - 1) are also received by the receiving antennas (0) through (Nr - 1). The characteristics of the subchannel which propagates the signals from the i-th transmitting antenna to the j-th receiving antenna are expressed as "$H_{ij}$" and form one component term of the Nt x Nr channel matrix H.

The subchannel characteristics are measured prior to transmission of actual data, typically by sending pilot signals. The transmitter 2 first transmits a pilot signal using the transmitting antenna (0). The receiver 3 receives the pilot signal transmitted from the transmitting antenna (0) through the receiving antennas (0) to (Nr -1). In this case, since the transmitting power of the pilot signal is determined in advance, the receiving device 3 obtains each component ($H_{0,0}$ to $H_{0,Nr-1}$) of the first row in the channel matrix by monitoring the power, SNR, etc. of the signal received through the receiving antennas (0) to (Nr - 1). Thereafter, each component of the 2nd to Nt-th rows in the channel matrix can be obtained, in the same way using pilot signals transmitted from each transmitting antenna.

In the MIMO system 1, if the symbol x ($x_0 \sim x_{Nt-1}$) is transmitted from the transmitting device 2, the signal y ($y_0 \sim y_{Nr-1}$) detected in the receiving device 3 is expressed by equation (1). Therefore, in the absence of noise n, the receiving device 3 can obtain correct transmitted symbols by detecting the channel matrix H and performing an inverse operation corresponding to the influence of each component in the channel matrix H on the signal. In practice, however, noise n is present and, in addition, the channel matrix H cannot be determined with absolute accuracy. Therefore, the receiver 3 estimates the transmitted symbol from the received signal y and the channel matrix H and introduces an algorithm for minimizing the error of this estimated value.

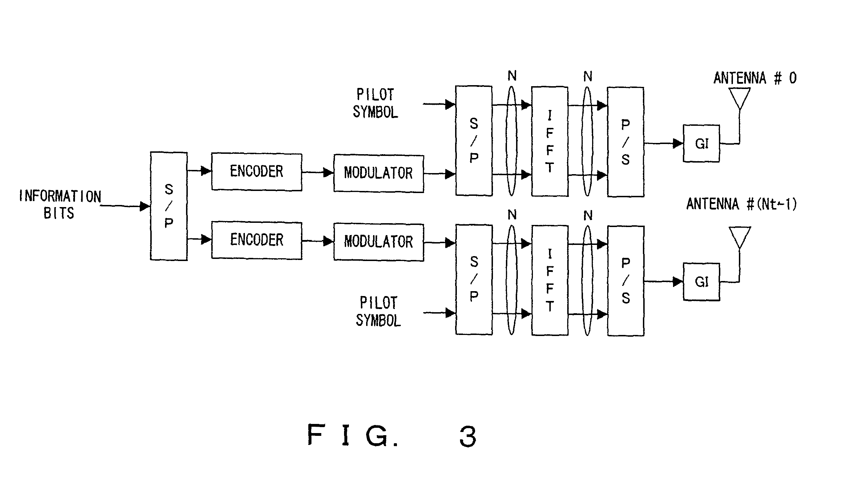

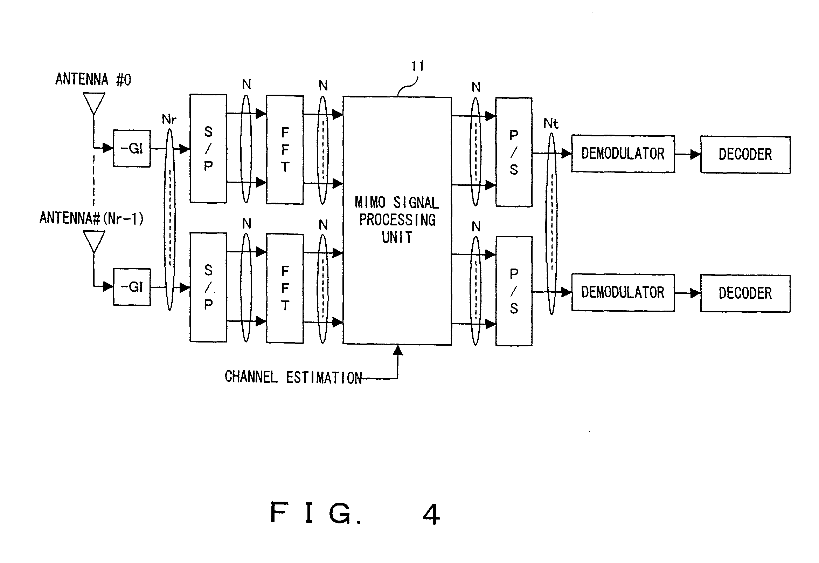

By way of background explanation, a MIMO-OFDM transmitter and receiver will be briefly outlined with reference to Figures 3 and 4. Fig. 3 is a schematic diagram of a MIMO-OFDM transmitter. High-speed binary data is encoded (convolutional code is an example), interleaved, and modulated (using a modulation scheme such as BPSK, QPSK, 64QAM, and the like). Independent channel encoders may be used for each transmitting antenna. Subsequently, the data is converted into parallel low-speed modulated data streams which are fed to N sub-carriers. The output from each encoder is carried separately on a plurality of sub-carriers. The modulated signals are frequency-division multiplexed by N-point inverse fast Fourier transform (IFFT). The resulting OFDM signal is converted into an analog signal by a D/A converter and is upconverted into RF band and transmitted over the air.

At the MIMO-OFDM receiver schematically shown in Fig. 4, the received signals from the Nr receive antennas are filtered by a band pass filter (BPF), and then down-converted to a lower frequency. The down-converted signal is sampled by A/D converter (namely, converted into a digital signal), and the guard interval is removed. After the sampled data is fed to the N-point fast Fourier transformer (FFT). After Fourier transformation is performed on each of the signals received through the Nr receive antennas, they are fed to the MIMO signal processing unit 11. Here, the MIMO signal processing unit 11 comprises a signal regeneration unit 4 which performs algorithms to compensate for the channel characteristics, using the channel matrix H and taking account of the precoding applied on the transmitter side. For example, "zero-forcing" as described later is used to cancel interference from other users thereby compensating the channel for each sub-carrier in the frequency domain. In this example, the output of the MIMO signal processing unit 11 is Nt independent data streams, and each data stream is independently demodulated, de-interleaved, and decoded. However, the outputs may be demultiplexed to form a single data stream, if a single stream was multiplexed, i.e. vertical encoding was applied, at the transmitter on to multiple antennas.

The methodology of zero forcing in MIMO systems for interference cancellation is well documented, and the following document is a good reference for such techniques:-

Q.H. Spencer et.al, "Zero forcing Methods for Downlink Spatial Multiplexing in Multiuser MIMO Channels", IEEE Trans. on Signal Processing, Vol. 52, No. 2, Feb., 2004

The above explanation has considered the case of a single transmitter sending MIMO signals to a single receiver, but of course a practical MIMO wireless communication system is much more elaborate than this, providing many mutually-adjacent cells in each of which a base station transmits over respective MIMO channels to multiple subscriber stations simultaneously. In practice, the adjacent cells overlap to some extent such that transmissions from one base station in one cell can cause interference to users at the edges of adjacent cells. If the cells have a hexagonal grid arrangement, then one cell may be adjacent to up to six neighbouring cells such that transmissions to a particular user may cause interference in more than one other cell.

MIMO and OFDMA are expected to enable high-capacity data throughput in future wireless communication systems such as those compliant with IEEE802.16m (also called Advanced WiMAX or Gigabit WiMAX). However, the above multi-user interference effects can become a significant obstacle in achieving the expected capacity enhancements in such systems. For example, a user near the edge of one cell, communicating with one BS using a particular frequency/time resource, may interfere with a user in an adjacent cell, served by a different BS using the same frequency/time resource. One promising methodology for interference reduction is to utilize some of the spatial modes for zero forcing onto users with higher interference effects, i.e. usually the cell edge users. Zero forcing can be thought of as a kind of beam forming such that by sacrificing one or more spatial modes, the beam of radio waves from a transmitter forms a null in the direction of a user for whom interference is to be reduced. The penalty with using the spatial modes for zero forcing is the potential for loss of some of the MIMO capacity.

Thus it is would be desirable to develop algorithms for identifying users at the BS where some of the spatial modes can be used for zero forcing, with minimal impact on the cell capacity. It is known in cellular mobile networks to apply pre-coding (zero-forcing) at the BS on downlink transmissions to an in-cell MS, to reduce interference experienced by an MS in an adjacent cell. If this idea was applied directly to the uplink, then the in-cell MS would do the pre-coding and it would need to know the uplink channel for the MS in the adjacent cell, which is not practical. It is desirable to provide an uplink solution.

According to an embodiment of a first aspect of the present invention, there is provided a wireless communication method for use in a MIMO system, the system having a first cell adjacent to one or more second cells, each cell being served by a base station and having a plurality of fixed or mobile subscriber stations, and each base station having MIMO channels between its cell and each subscriber station in its cell, the method comprising: recognising an opportunity for a reduction of interference experienced between a particular subscriber station in a particular said second cell and the base station of the first cell; selecting as the basis of interference reduction a rank deficient MIMO channel amongst the MIMO channels between the base station of the first cell and each subscriber station in the first cell; and applying post-coding to transmissions on the selected MIMO channel, where the selected MIMO channel is an uplink channel, or on a MIMO uplink channel corresponding to the selected MIMO channel, where the selected MIMO channel is a downlink channel, to reduce the interference experienced by the base station of the first cell.

The system could be, for example, a cellular mobile network, distributed geographically to provide communication services to users in a geographical area. The mobile subscriber stations could therefore be, for example, mobile telephones, PDAs (Personal Digital Assistants), personal computers, or any other fixed or mobile communication devices.

The one or more second cells may be adjacent to the first cell such that they together surround the first cell. The channels through which a particular user communicates with its serving base station may be considered to be links, for example an uplink and a downlink corresponding to the uplink.

The method may comprise selecting the MIMO channel from amongst the uplink and/or downlink MIMO channels between the base station of the first cell and each subscriber station in the first cell. For example, the selection may be from amongst only the uplink channels, or only the downlink channels, or both the uplink and downlink channels.

The method preferably comprises assessing how rank deficient the various said MIMO channels are, and basing the selection on the assessment. This may, for example, comprise assessing the level of rank deficiency for each of the channels from amongst which the selection is made. Optionally, only a subset of those channels may be assessed, for example if the number of channels is large and it is more efficient, and sufficient, to assess only a subset. The subset could for example be a subset for which it is expected that the level of rank deficiency would be high, for example based on previous assessments.

Preferably, the most rank deficient MIMO channel is selected from amongst the assessed channels as the basis of interference reduction. This is likely to lead to the greatest net capacity benefit for the system.

The method may comprise, following the selection, checking the correlation between the most rank deficient MIMO channel and a MIMO channel between the base station of the first cell and the particular subscriber station in the particular second cell, and, if the correlation exceeds a threshold, selecting instead the next most rank deficient MIMO channel as the subject of interference reduction. This checking process may help to improve the chance of achieving a net capacity benefit, or even the best net capacity benefit, for the system.

The rank deficient MIMO channel may be selected by finding eigenvalues $\lambda$ of each absolute MIMO channel matrix and measuring the ratio of the largest eigenvalue $\lambda_m$ to the smallest eigenvalue $\lambda_1$.

In the case that the interference is partly experienced in respect of downlink transmissions, the selected channel may be a downlink channel, and the method may comprise applying pre-coding to transmissions on that downlink channel to reduce the interference experienced by the particular subscriber station in the particular second cell. In this way, it may be possible to achieve an interference reduction, and even a net capacity benefit, in respect of both the uplink and the downlink.

Preferably, the post-coding applied on the uplink channel corresponding to the selected downlink channel is based on the pre-coding applied on the selected downlink channel. For example, the pre-coding may employ a pre-coding vector $V_0$ and the post-coding may employ a post-coding vector $U_0{}^H$, and the method may comprise setting vector $U_0{}^H$ to be the transpose of vector $V_0$. This may lead to a benefit in terms of computational workload, power consumption, and communication overhead.

In the case that the interference is partly experienced in respect of downlink transmissions, and the selected channel is an uplink channel, the method may further comprise selecting the downlink channel corresponding to the selected uplink channel, and applying pre-coding on the selected downlink channel to reduce the interference experienced by the particular subscriber station in the particular second cell. In this way, it may be possible to achieve an interference reduction, and even a net capacity benefit, in respect of both the uplink and the downlink.

The method may further comprise basing the pre-coding applied on the selected downlink channel on the post-coding applied on the selected uplink channel. For example, the pre-coding may employ a pre-coding vector $V_0$ and the post-coding may employ a post-coding vector $U_0{}^H$, and the method may further comprise setting vector $V_0$ to be the transpose of vector $U_0{}^H$. This may again lead to a benefit in terms of computational workload, power consumption, and communication overhead.

Preferably, the same time/frequency resources are assigned to the post-coded and/or pre-coded MIMO channels as are assigned to the corresponding MIMO channel(s) between the base station of the first cell and the particular subscriber station in the particular second cell. Generally, the greater the overlap between the assigned resources, the greater the chance of achieving a net capacity benefit. There may be benefit, however, if the overlap is less than 100%.

The pre-coding and/or post-coding, as the case may be, preferably involves zero-forcing. The method of pre-coding need not be the same as the method of post-coding.

The method may comprise carrying out communications between various elements of the system. For example, the method may comprise receiving relevant time and frequency co-ordinates assigned to the subscriber station in the second cell, and the base station in the first cell may assign the same time and frequency co-ordinates to the channel to be used for pre-coding and/or post-coding.

Where pre-coding is employed, the method may be triggered by a request received from the base station of the second cell, or from the subscriber station in the second cell.

A rank deficient MIMO channel may be identified by finding eigenvalues $\lambda$ of each absolute MIMO channel matrix and measuring the ratio of the largest eigenvalue $\lambda_m$ to the smallest eigenvalue $\lambda_1$. For example, there may be calculated, for each MIMO channel to subscriber stations in the first cell, the ratio sum: $\lambda_m/\lambda_1 + \lambda_m/\lambda_2 + ...... + \lambda_m/\lambda_{Nr2}$ where Nr2 is the number of receive antennas used by said subscriber station in the second cell, and the channel with the largest sum may be selected for pre-coding. It will be appreciated that a similar calculation may be employed for the uplink, i.e. for post-coding.

As another example, there may be calculated, for each MIMO channel to subscriber stations in the first cell, the ratio: $\lambda_m/\lambda_{Nr2}$, where $\lambda_m$ is the largest eigenvalue in the MIMO channel matrix, Nr2 is the number of receive antennas used by said subscriber station in the second cell, and $\lambda_{Nr2}$ is the Nr2-th eigenvalue, and selects the channel with the largest ratio for precoding. Again, it will be appreciated that a similar calculation may be employed for the uplink, i.e. for post-coding.

The method may apply the post-coding and/or pre-coding to reduce interference between the base station of the first cell and a plurality of said users in the second cell, or in different second cells, simultaneously. Multiple requests from the second cell or cells as mentioned above may be involved in this method. Pre-coding and/or post-coding may be conducted on only one respective MIMO channel so as to reduce interference between the base station of the first cell and a plurality of said users in the or more than one second cell simultaneously. The base station in the first cell may exchange messages with the base station in the or in more than one second cell to co-ordinate the post-coding and/or the pre-coding. Similarly, the subscriber station in the second cell, or subscriber stations in the or more than one second cell, may send messages to the base stations of the first cell and/or the second cell to co-ordinate the post-coding and/or the pre-coding.

The method may comprise estimating a net capacity effect on said MIMO system of applying the post-coding and/or the pre-coding, and proceeding to apply the post-coding and/or the pre-coding only if a net capacity benefit is estimated.

The method may be applied to the uplink, and optionally also to the downlink, of an OFDMA-based wireless communication system.

According to an embodiment of a second aspect of the present invention, there is provided a base station for use in a first cell of a MIMO system, the system having said first cell adjacent to one or more second cells, each cell being served by such a base station and having a plurality of fixed or mobile subscriber stations, and each such base station having MIMO channels between itself and each subscriber station in its cell, the base station of the second aspect comprising: recognition means operable to recognise an opportunity for reduction of interference experienced between a particular subscriber station in a particular said second cell and itself; selection means operable to select as the basis of interference reduction a rank deficient MIMO channel amongst the MIMO channels between itself and each subscriber station in its cell; and means operable to apply post-coding to transmissions on the selected MIMO channel, where the selected MIMO channel is an uplink channel, or on a MIMO uplink channel corresponding to the selected MIMO channel, where the selected MIMO channel is a downlink channel, to reduce the interference experienced by the base station of the second aspect.

According to an embodiment of a third aspect of the present invention, there is provided a MIMO wireless communication system made up of a plurality of cells each comprising a base station according to the aforementioned third aspect of the present invention and a plurality of said subscriber stations served by that base station. Each of the subscriber stations may be configured to detect interference on its downlink operable to send a request for interference reduction.

According to an embodiment of a fourth aspect of the present invention, there is provided software which, when executed by a processor of a base station in a wireless communication system, causes the base station to carry out a method according to the aforementioned first aspect of the present invention.

According to an embodiment of a fifth aspect of the present invention, there is provided software which, when executed by a processor of a base station in a wireless communication system, causes the base station to become a base station according to the aforementioned second aspect of the present invention.

According to an embodiment of a sixth aspect of the present invention, there is provided a computer program which, when executed on a base station of a MIMO system, is operable to carry out a wireless communication method, the system having a first cell adjacent to one or more second cells, each cell being served by a said base station and having a plurality of fixed or mobile subscriber stations, and each base station having MIMO channels between its cell and each subscriber station in its cell, the method comprising: recognising an opportunity for a reduction of interference experienced between a particular subscriber station in a particular said second cell and the base station of the first cell; selecting as the basis of interference reduction a rank deficient MIMO channel amongst the MIMO channels between the base station of the first cell and each subscriber station in the first cell; and applying post-coding to transmissions on the selected MIMO channel, where the selected MIMO channel is an uplink channel, or on a MIMO uplink channel corresponding to the selected MIMO channel, where the selected MIMO channel is a downlink channel, to reduce the interference experienced by the base station of the first cell.

Thus, embodiments of the present invention can provide a technique for selection of users for post-coding (and, optionally, pre-coding) so as to tend towards a net capacity benefit.

Reference is made, by way of example only, to the accompanying drawings in which:

Fig. 1 is a conceptual diagram of a MIMO communication channel;
Fig. 2 is a schematic diagram of a transmitter and a receiver communicating via a MIMO channel;
Fig. 3 is a schematic diagram of a MIMO-OFDM transmitter;
Fig. 4 is a schematic diagram of a MIMO-OFDM receiver;
Fig. 5 illustrates a configuration of cells and users employed for the purpose of simulations;
Fig. 6 is a graph showing simulated MIMO channel capacities achieved using an example selection algorithm;
Fig. 7 is a graph showing simulated MIMO channel capacities for a random channel selection;
Fig. 8 is a flowchart of a channel selection algorithm for MIMO pre-coding for use in part of an embodiment of the present invention;
Fig. 9 is a schematic diagram of a communication system embodying the present invention;
Fig. 10 is a flowchart of an algorithm embodying the present invention; and
Fig. 11 is a flowchart of a further algorithm embodying the present invention.

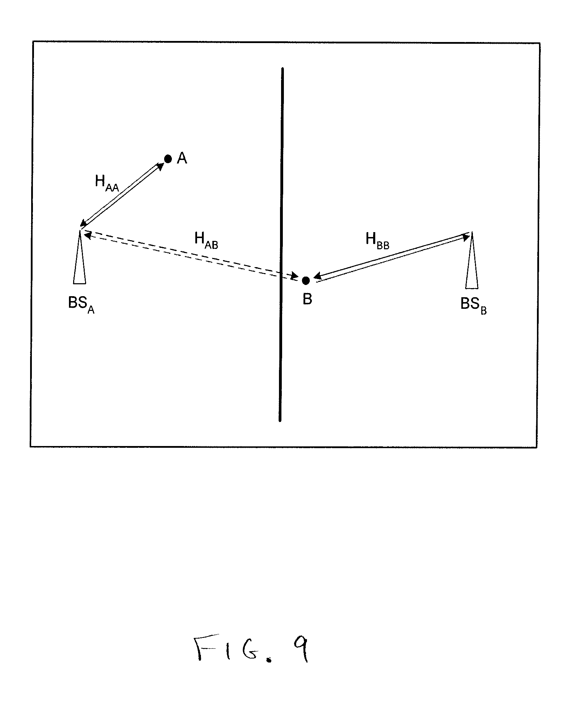

Before explaining embodiments of the present invention, the underlying principles will first be outlined.
The basic idea of MIMO zero forcing can be explained as follows. Consider a user A served by a base station $BS_A$, and another user B who is at or near the edge of an adjacent cell, served by another base station $BS_B$. Reference may, at this early stage, be briefly made to Figure 9 to aid further understanding, however Figure 9 will be described in greater detail later. User A is referred to as an "in-cell" user, and B as an adjacent cell user or "cell edge" user for convenience, though it should be noted that such a user need not be physically located at a cell edge. If both users A and B are visible to the base station $BS_A$ through radio channels $H_{AA}$ and $H_{AB}$ and employ $Nr_1$ x Nt and $Nr_2$ x Nt (number of receive by number of transmit antennas) MIMO systems respectively (Nt = $Nr_1$+$Nr_2$), the transmission data vectors to A (from $BS_A$) can be pre-coded with a Nt x $N_{r1}$ precoding matrix $V_0$ such that there is no interference to user B from this transmission. The matrix $V_s$ is generated by obtaining the singular vectors (through singular value decomposition) of radio channel $H_B$. Matrix $V_0$ consists of the last (Nt-$Nr_2$) column vectors of the right singular matrix $V_s$ of $H_B$, which spans a null space as Nt > $Nr_2$. In mathematical notation this can be written as:

$$[U_s, D, V_s] = svd(H_{AB})$$
$$V_s = [V_1 \; V_0]$$

$$(2)$$

where $U_s$ is the left singular matrix and D is a diagonal matrix with n singular values as the diagonal elements.
The $Nr_1$ x 1 received signal vector y for user A with precoding with $V_0$ (c.f. eqn (1)) becomes:

$$y = H_{AA}.V_0.x + n \qquad (3)$$

Where x is the Nt x 1 transmit vector and the $Nr_1$ x 1 vector n denotes the noise addition. As $V_0$ contains (Nt - $Nr_2$)

columns, the transmission from $BS_A$ to A is limited to $Nr_1 = (Nt-Nr_2)$ parallel streams as a result of pre-coding. This may result in a loss of capacity, considering that Nt (if A has the potential to employ an NtxNt MIMO system) parallel data streams are possible if this pre-coding scheme was not applied. However, the actual loss will depend on the capacity that was available on the $Nr_2$ streams that are instead to be utilised for zero forcing. Furthermore, the radio channel $H_{AA}$ is required to be de-correlated from the radio channel $H_{AB}$ from the same base station in order to achieve an effective data transmission to A. That is, it is not feasible to provide a strong signal to user A if this would be close to a null beam seen by user B.

As already indicated above, the present invention is particularly applicable to OFDMA (Orthogonal Frequency Division Multiple Access) based systems where the inter-cell interference is generated by collisions from the utilization of the same time/frequency resources in adjacent cells. When user B approaches the cell edge of the serving base station $BS_B$, he will see significant interference from adjacent cell base station $BS_A$ which serves its user A with the same time/frequency resource. Interference to user B may also occur even without user B approaching the cell edge, e.g. if $BS_A$ is transmitting with a high power. The known method to deal with this is to separate the users in the time and/or frequency domain, however this will result in a reduction in the capacity of the system. Instead, it is possible to use the above pre-coding method where the signals transmitted to user A can be pre-coded with matrix $V_0$ such that the interference to user B is nullified. This also involves a loss of capacity (since the effect of the precode matrix is to reduce the number of symbols transmitted, less data is received by user A) so it is desirable to address this problem.

Disclosed herein is an algorithm for scanning across active users in $BS_A$ and selecting user A such that the capacity loss referred to above is minimized and there is a net gain in the capacity as a result of the interference reduction afforded to user B. This provides the potential to achieve a net gain in capacity. The algorithm applies zero forcing to the most rank-deficient channel, that is, to the user who will be least affected by removing some of the parallel MIMO streams.

Before introducing an embodiment of the present invention, the downlink will be considered in detail to aid in a better understanding of the present invention. For convenience, the following description refers to a "base station" as carrying out downlink transmissions, but in general the teaching can be applied to any transmitter capable of communicating with multiple users in a wireless communication system including a relay station, a subscriber station in a peer-to-peer network, etc. The term "base station" should accordingly be given a broad interpretation. When focus turns to the uplink later, again the term 'base station' should be given a broad interpretation, for example covering any receiver capable of communicating with multiple users in a wireless communication system.

In order to ensure the net capacity gain, the base station searches for "rank deficient" MIMO channels (that is, channels where two or more of the constituent MIMO sub-channels are correlated, and hence they will provide minimal capacity improvement to the overall user capacity) amongst its active users, and allocates the pre-coding vector to the most rank-deficient channel.

To identify rank deficient channels, the base station looks at the eigenvalues of the absolute MIMO channel matrix (H.H*, with * denoting conjugate transpose) and measures the ratio of the largest eigenvalue ($\lambda_m$) to the smallest value ($\lambda_1$). Typically, the base station will already be calculating these eigenvalues for other purposes (waterfilling, eigen decomposition etc) so the additional processing overhead is not high. The present invention also assumes that the number of receive antennas $Nr_1$ and $Nr_2$ can be adaptively selected within the constraint of $Nr_1 + Nr_2 = N_t$, depending upon the required number of spatial modes for zero forcing. In other words, it should be possible for each subscriber station to switch off one or more of its antennas. This requirement is based on the number of cell edge users (in multiple cells, and not necessarily at a cell edge) who can share the same frequency/time resource as the user A, and thus benefit from zero forcing. A minimum of r spatial modes are required to simultaneously apply zero forcing to r cell edge users.

In general, if k spatial modes are used for zero-forcing (i.e. Nt - $Nr_1$ = $Nr_2$ = k) the algorithm will calculate the ratio sum ($\lambda_m/\lambda_1 + \lambda_m/\lambda_2 + ...... + \lambda_m/\lambda_{Nr2}$) and use the channel with the largest sum ratio for pre-coding. Here, $\lambda_2$ is the second lowest eigenvalue and $\lambda_{Nr2}$ is the $Nr_2^{th}$ eigenvalue in ascending order. A final check on the channel correlation between selected channel $H_{AA}$ and $H_{AB}$ is carried out and if the correlation is below a pre-defined threshold value of $\rho_{th}$, the pre-coding is carried out. If the channel correlation is higher than $\rho_{th}$, the selection is discarded and the next channel with highest sum ratio of eigen values is selected, this is because of the requirement for effective data transmission mentioned previously. This process is iterated until the channel correlation between $H_{AA}$ and $H_{AB}$ is found to be below $\rho_{th}$. The correlation $\rho(X,Y)$ between two vectors X and Y is defined as;

$$\rho(X,Y) = \frac{E\left[X.Y^*\right]}{\sqrt{E\left[X.X^*\right]E\left[Y.Y^*\right]}} \qquad (4)$$

where E[ ] denotes the expectation operator and * denotes the complex conjugate.

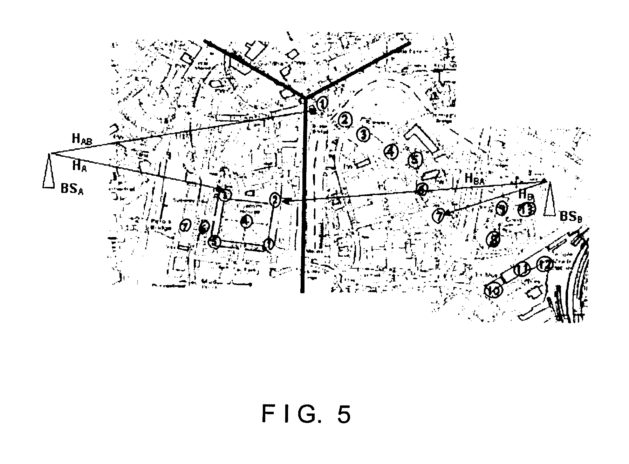

In order to test the effectiveness of this algorithm, a set of simulations was done using real MIMO channel data and SINR (Signal to Interference plus Noise Ratio) values generated from a system level simulator. The MIMO channel data is for a 4x4 system covering measurement locations which can be segmented into 2 adjacent cells. Each cell contains 13 measurement locations, which can be considered as active users. The cell deployment is shown below in Figure 5.

Figure 5 illustrates a configuration of cells and users employed for the purpose of simulations, based on real-world map data. The solid lines in Figure 5 denote cell edges of mutually-adjacent hexagonal cells, and numbers in circles denote individual subscriber stations or users. The elongated triangles at the edges of Figure 5 denote base stations of respective cells.

For the simulations, 2 cell edge users were identified (user 2 from $BS_A$ and user 1 from $BS_B$) as the users receiving most interference from the adjacent cells. Then MIMO pre-coding was conducted to nullify the interference. In other words, the example method was applied twice. The original 4x4 MIMO system was reduced to 4x2 MIMO systems for applying zero forcing, thus employing 2 spatial modes for the interference cancellation. The example method identified user 3 in $BS_A$ and user 7 in $BS_B$ as the rank deficient channels where pre-coding could be applied, as the resulting reduction in capacity for that user would be minimal. The channel capacities were calculated for the cell edge user and the selected pre-coding user with and without this pre-coding algorithm. The channel capacity for an nxn MIMO system is given by;

$$C = \log_2\left(\det\left[I_n + \frac{SINR}{n_T}\left(HH^H\right)\right]\right) \qquad (5)$$

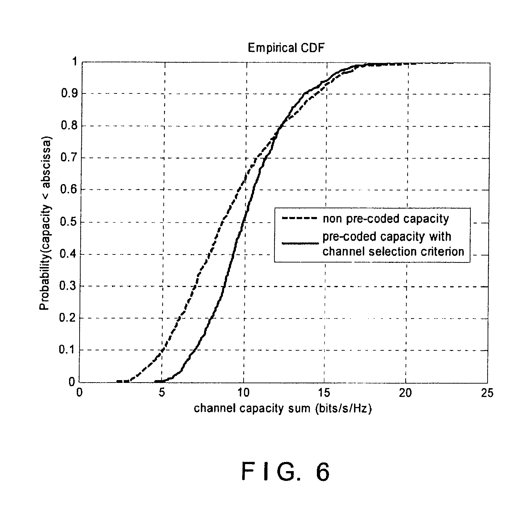

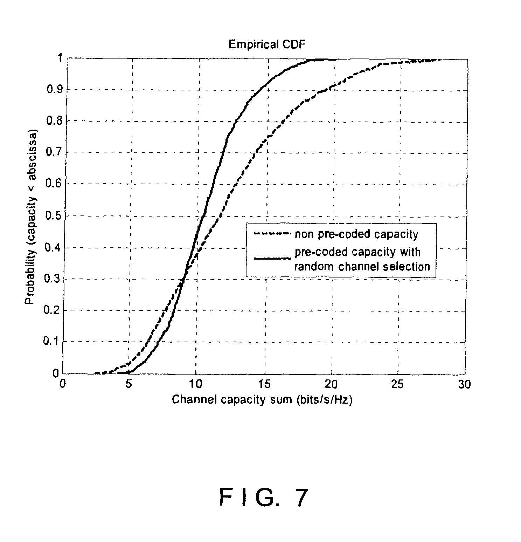

where $I_n$ is the identity matrix, H is the channel matrix and $n_T$ is the number of parallel data streams transmitted. The SINR was selected from the system level simulator, according to the distance from the base station. The cell radii are assumed to be 1000m in the simulations. The system level simulator was used to generate SINR with and without the most significant interference source. For cell edge users, these two SINR values were applied in the comparison. The cumulative distribution functions for the sum MIMO capacities (sum of cell edge user and pre-coded user) for the $BS_B$ cell are shown below in Figures 6 and 7. Figure 6 compares the capacities of the pre-coding with the selection algorithm and non-precoded 4x4 systems. Figure 7 compares pre-coding applied to a random selection of users (randomly selected from the 13 users for each iteration of the simulation) and non-precoded 4x4 systems. In each of Figures 6 and 7, the abscissa represents the capacity of the two users affected by the zero-forcing algorithm, namely the cell user for whom interference is to be reduced and the rank-deficient user providing one or more spatial modes for zero forcing. The ordinate represents the probability of an overall improvement in capacity.

Figures 6 and 7 clearly show the benefits of the example channel selection algorithm over a random choice for pre-coding. The proposed selection algorithm gives improved sum capacities (i.e. a net capacity benefit) 80% of the time over the non-precoded system. However with the random channel selection the net capacity benefit occurs only 30% of the time and for the remainder a significant loss is experienced. These results are specific to the measured channels and the generated SINR values (the iterations were done 1000 times for each user) but they do give an indication of the benefits of the example algorithm.

Therefore it can be concluded that in this scenario it was more beneficial, from a system capacity point-of-view, to utilise two streams of the rank deficient users for zero forcing, as the reduction in the individual user capacity was out-weighed by the improvement in the interfered users' capacity, due to the reduction in interference.

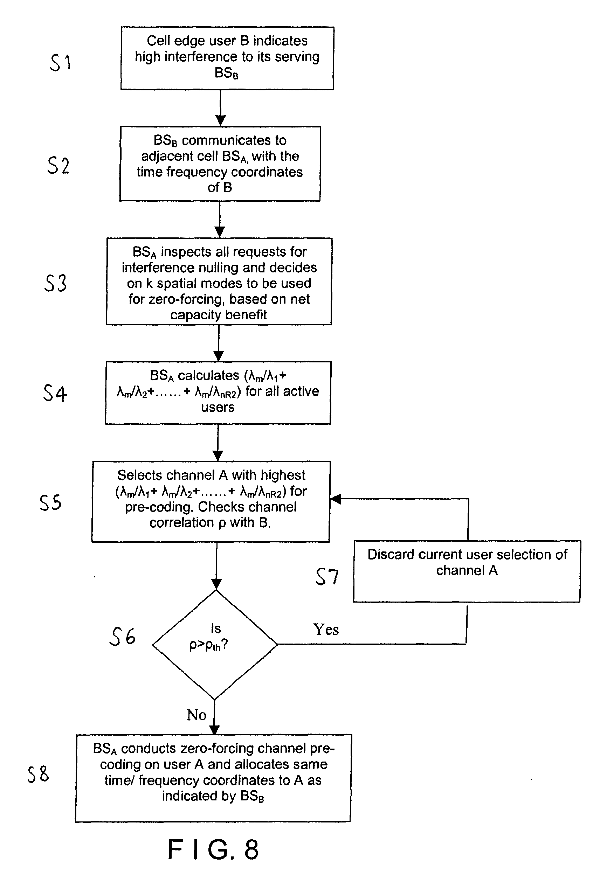

The flowchart of the method carried out by each base station, in the present example, is given in Figure 8.

In step S1, a user in an adjacent cell (user B) reports experiencing high interference due to transmissions from base station $BS_A$. Typically it does this by sending a message on the uplink to its own base station $BS_B$. Next (S2), base station $BS_A$ receives the notification of interference together with information on the time/frequency resources allocated to user B. In this example, this is communicated to $BS_A$ from $BS_B$ e.g. via a backbone network (wired or wireless). If more than one such notification is received (S3) , $BS_A$ collates and if necessary prioritises them, using the criterion of a net capacity benefit (see below) to decide whether to sacrifice more than one spatial mode for zero-forcing. Then, $BS_A$ determines which of the users in its cell should provide the spatial modes for zero forcing. To minimise the loss of data capacity overall, a rank-deficient MIMO channel is selected as already mentioned. This involves calculating, for each of its active users (i.e., users in its own cell), an eigenvalue ratio or ratio sum as specified above. In step S5, the most rank-deficient channel $H_{AA}$ (in this case, determined as the channel with the highest ratio sum $\lambda_m/\lambda_1 + \lambda_m/\lambda_2 + ...... + \lambda_m/\lambda_{Nr2}$) is selected and the correlation between this channel and channel $H_{AB}$ of the cell edge user B is checked. In the event of too high a correlation, (S6, Yes), step S5 is repeated selecting a different rank-deficient channel.

As a further check (as indicated in step S3 of Fig.8) it is preferable for the base station to find out the net capacity benefit to be expected from carrying out the zero forcing, i.e. the gain in capacity on the MIMO channel to user B enabled by reduced interference, minus the loss of capacity on the rank-deficient channel to user A. If no net capacity benefit is found then the procedure is abandoned. To make this calculation it will be helpful, though not necessarily essential, for the base station to exchange information with the base station serving user B, and/or to receive information from a central controller in the system. Otherwise (S6, No) the zero-forcing is carried out, including allotting to user A the same frequency/time resources of those assigned to edge cell user B by $BS_B$.

Figure 8 shows the steps taken for zero forcing on a single user (user A) to cancel or reduce interference to one or more cell edge users (user B). The process may be repeated to carry out zero forcing on additional users, at the expense of more spatial modes. Alternatively, it may sometimes be possible to reduce the interference experienced to two or more cell edge users by zero forcing on a single in-cell user. Such two or more cell edge users can be in multiple adjacent cells and can be allocated the same time/frequency resources. However, the total sum of active receivers (of these cell edge users plus the one in-cell rank deficient user) should not exceed Nt, the number of transmit antennas at the base station.

In order to be effective, the example channel selection algorithm should normally be applied in favour of cell edge users, as cell edge users can expect a significant interference reduction. On the other hand, it is possible for users not physically at the cell edge to experience significant interference from another base station. However, in practice only a limited number of rank-deficient MIMO channels are likely to be available, and therefore, it is desirable for the base station to be selective in acting on interference-reduction requests. It may, in some instances, be desired to limit such requests to cell edge users, assuming that these can be identified, and this might be achieved by configuring the subscriber stations such that they only issue a request when they are cell edge users, or by configuring each base station such that it only accepts requests from subscriber stations whom it determines to be at cell edges. The above-mentioned check for a net capacity benefit will also tend to have the effect of limiting accepted requests to cell edge users.

In addition, it should be noted that whilst the flowchart in Figure 8 is a preferred example, there are some possible alternatives to the steps shown, as summarised below.

In an alternative scenario, instead of the cell-edge subscriber station indicating to its serving station (BS) the interference situation, it directly communicates with the interfering BS. It can be assumed due to the fact that interference is significant, that the subscriber station experiencing interference will be in a position that is in range for communication with this BS. The two BSs can then either co-ordinate resource allocation, such that nulling is performed appropriately, or the subscriber station itself can arbitrate between the two BSs to prevent the need for signalling over the backbone network. If users from multiple cells communicate to the same interfering BS in this manner, this BS can decide on the k number of spatial modes to be allocated for interference nulling.

One simpler approach to calculating the sum of the eigenvalue ratios is simply to use the single ratio $\lambda_m/\lambda_{Nr2}$, where $\lambda_{Nr2}$ is the Nr2-th smallest eigenvalue. Whilst this might not be as accurate as the preferred methodology discussed earlier, it provides an alternative mechanism to indicate a candidate with lower processing requirements.

Thus, the above teaching can provide a wireless communication method in a MIMO system in which users in each of multiple adjacent cells are served by a base station of the cell, the base station transmitting data on a downlink to each user in the cell via a respective MIMO channel. The method involves the base station ($BS_A$) of a first cell carrying out the following steps: receiving, from a base station ($BS_B$) or from a user (B) in another cell, one or more requests for reduction of interference which it is causing to users in that other cell; identifying a rank deficient MIMO channel ($H_A$) among its transmission links to users in the first cell to select a MIMO channel to be made the subject of zero forcing; and applying zero forcing to transmissions on the selected MIMO channel ($H_{AA}$) to reduce interference experienced by at least one user (B) in the other cell. A rank deficient MIMO channel is chosen to minimise the reduction of overall data capacity due to the zero forcing; it is found by examining eigenvalues of the channel matrix and calculating ratios thereof. In addition, correlation between the selected channel ($H_A$) and the channel ($H_B$) to the user (B) in the other cell is checked and if they are correlated by more than a threshold amount, another channel in the first cell is selected instead.

It has been appreciated that multi-user, co-channel interference can significantly impair the potential data throughputs in the 4th Generation OFDMA based wireless systems. This applies to the uplink, as well as to the downlink. In OFDMA, the co-channel interference typically comes from specific, inter-cell users who share the same time/frequency resources. It has been shown that one promising method for interference reduction is to utilize MIMO eigen-beamforming for spatially nulling interference from targeted users. However, the use of MIMO spatial modes for interference nulling comes at the cost of potential for loss of some of the MIMO capacity. A methodology not directly embodying the present invention (but suitable for use as part of an embodiment of the present invention) has been described above, in which it is possible to select the users for MIMO precoding so that the gain in interference reduction is greater than the potential capacity loss (i.e. a net capacity benefit) in the downlink. This analysis will be extended to the uplink below, to illustrate how MIMO zero-forcing with post-coding at the base station can be used to provide a net capacity benefit by cancelling cell edge interference. While the proposed scheme minimizes overheads needed for signal feedback and computational complexities, in an OFDMA-TDD system, it may equally be applied to an OFDMA-FDD system, where the channel feedback information is available.

The following preferred methodology, which embodies the present invention, utilizes the channel selection criteria detailed in the downlink embodiment disclosed above for the uplink as well, in the form of zero-forcing postcoding making use of the same SVD vectors. This implies that the uplink and downlink channels are reciprocal, which can be justified in the TDD scenario. Also, the assumption is that the same time frequency OFDMA resources are allocated for the downlink and the uplink by the BS scheduler, similar to an AMC sub-carrier allocation.

The system arrangement described previously is presented again by way of Figure 9, to assist with further explanation. As before, a channel $H_{AA}$ may be selected by $BS_A$ for zero-forcing pre-coding, with the intention of nulling interference to the cell edge user B connected to $BS_B$. The selection of user A is preferably based on the maximum eigenvalue ratio ($\lambda_m/\lambda_1 + \lambda_m/\lambda_2 + \ldots\ldots + \lambda_m/\lambda_{nR2}$), where $\lambda_m$ is the maximum eigen value, $\lambda_1$ is the lowest eigen value, $\lambda_2$ is the second lowest eigen value, etc. It will be recalled that this selection can lead to a net capacity benefit in the downlink. The SVD of the $n_T \times n_{R2}$ MIMO channel $H_{AB}$ and the precoding on the $n_T \times n_{R1}$ MIMO channel $H_{AA}$ (for the downlink) is shown already above in equation (2). $H_{AB}$ is the channel which connects $BS_A$ with the cell edge user B, that receives interference from $BS_A$. Because $H_{AB}$ is not a square matrix, some ($n_{R1}$) of its singular values would be zero and when HAB is multiplied with the corresponding singular vectors, the answer is zero. In general terms, this is the type of operation used here to nullify interference towards user B from $BS_A$.

Vector $V_0$ which corresponds to the null space of $H_{AB}$ is chosen as the pre-coding vector. The received signal vector $y_A$ for user A with pre-coding with $V_0$ is denoted as shown above in equation (3).

A selection requirement for $H_{AA}$ is that it is de-correlated with $H_{AB}$, so the pre-coding will not nullify the wanted user signal. As $V_0$ contains ($n_T - n_{R2}$) columns, the transmission from $BS_A$ to A is limited to $n_{R1} = (n_T - n_{R2})$ parallel streams as a result of pre-coding.

The received signal for the user B (in cell B) consists of the wanted signal from $BS_B$ which is precoded by F to carry out conventional eigen beamforming) and the interference signal from $BS_A$ (which is intended for user A). The received signal $y_B$ for user B may therefore be shown as follows:

$$y_B = H_{BB}.F.x_B + H_{AB}.V_0.x_A + n \qquad (6)$$

Pre-coding with $V_0$ ensures that the term $H_{AB}.V_0$ is nulled, cancelling the interference, and this advantage will already be recognised from the teaching disclosed above.

In an OFDMA-TDD type uplink, the channel reciprocity enables the same channel estimations (and hence the same SVD vectors) to be used, when the time/frequency OFDMA resource allocation for users A and B remains the same in the uplink as for the downlink. In this scenario, the main source of inter-cell interference for $BS_A$ will be coming from user B. Accordingly, it will be shown how the same SVD vectors (as above) can be used for postcoding received signals at $BS_A$, such that interference from B can be nullified.

The MIMO channel seen by $BS_A$ from the user B in the uplink will be $H_{AB}^T$, where $[\ ]^T$ denotes the transpose operator. The SVD of this MIMO channel is depicted below;

$$[U_r, D_r, V_r] = svd(H_{AB}^T)$$

$$U_r = [U_1; U_0] \qquad (7)$$

Post-coding the received signal at $BS_A$ with $U_0^H$ (null space of $H_{AB}^T$), where $Z^H$ is the Hermitian transpose of Z, will ensure that the interference term $U_0^H.H_{AB}^T.x_B$ is nulled. The received signal $y_{BSA}$ at $BS_A$ may therefore be shown as follows:

$$y_{BS_A} = U_0^H H^T_{AA}.x_A + U_0^H H^T_{AB}.x_B + n \qquad (8)$$

It can be shown mathematically that this postcoding null vector $U_0^H$ is in fact the transpose of pre-coding null vector $V_0$, i.e. $U_0^H = V_0^T$. Hence, the zero-forcing operation at $BS_A$ simplifies to postcoding with the previously calculated (and transposed) SVD vector $V_0^T$. In an AMC environment, it can be safely assumed that the channel conditions would not change during the downlink and uplink subframes (5ms is an approximate duration of the two subframes together) and hence the estimated $V_0$ from the downlink can be used in the uplink.

In some cases, there may be some constraints on the two base stations $BS_A$ and $BS_B$ such that they need to collaborate to inform $BS_A$ about cell edge user B and its channel estimations on $H_{AB}^T$. However, this information may instead be detected by $BS_A$, or provided from some central resource. For example, if the signal of user B is strong, $BS_A$ could detect the $H_{AB}$ channel through pilot information. However, this would preferably be a secondary action of $BS_A$, as $BS_A$ should primarily support its active users in cell A. In general, however, MIMO schemes intended for interference cancellation will be collaborative with adjacent BSs, as the main source of interference comes from adjacent cells. Additionally, the schedulers of $BS_A$ and $BS_B$ preferably assign the same time/frequency resources to the respective users A and B both in the downlink and in the uplink.

In order to somewhat ease this constraint, the base stations can maintain a list of potential cell edge users {B} and suited rank deficient users {A} for precoding and postcoding. Even a separate zone in the DL and UL sub-frames can be assigned for these precoding and postcoding operations, depending on the availability of suitable users. Also, this scheme is most suited for users with applications where there is symmetrical usage of DL and UL resources, such as VoIP. As the MIMO pre-coding and post-coding operations are carried out on a sub-carrier basis, there are benefits of interference cancellation even if less than all of the time/frequency resources are identical for users A and B, however the net capacity benefit cannot be guaranteed in such cases. There is potentially at least some gain even if the overlap between the resources for A and B is less than 100%.

The main benefits of the present preferred embodiment (hereinafter the "first preferred embodiment") come from the effective re-use of the estimated channel information, which amounts to a saving in complexity. As the MIMO channels $H_{AB}$ and $H_{AB}^T$ have the same spatial eigen modes, the pre-coding vector $V_0$ in the downlink can be re-used for post-coding in the uplink. The capacity gains in channel $H_{AA}$ come from the reduction of interference. Additionally, for the uplink the number of transmit antennas would drop from $n_T$ to $n_{R1}$, which will increase the transmit power per antenna. This can further increase the MIMO capacities in the uplink. For the downlink, the capacity improvement depends on the SINR improvement in channel $H_{BB}$, and in the uplink it depends on the SINR improvement in channel $H_{AA}$.

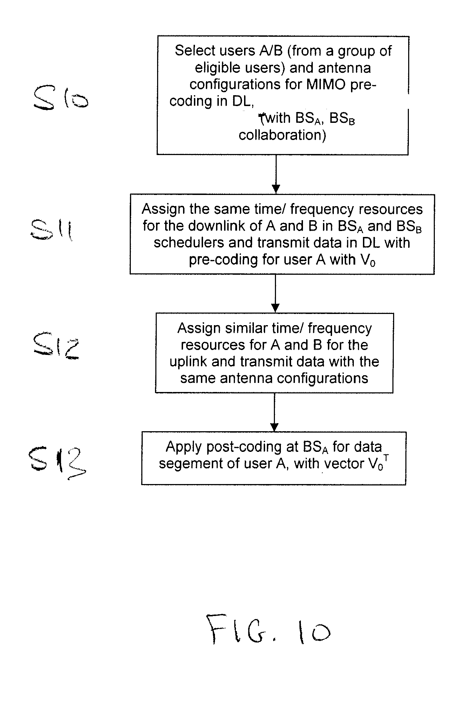

Figure 10 is a flowchart detailing method steps that may be carried out in the first preferred embodiment of the present invention. It will of course be appreciated that the previously-described methodology (as exemplified in Figure 8 as described above) forms part of the first preferred embodiment, and accordingly where appropriate duplicate description is omitted.

In step S10, base station $BS_A$ collaborates with base station $BS_B$ to select users A and B and antenna allocations for MIMO pre-coding in the downlink as in steps S1 to S6 (i.e. S6, Yes) of Figure 8. Next, in step S11, the zero-forcing is carried out, including allotting to user A the same frequency/time resources of those assigned to cell edge user B by $BS_B$, as in step S6 (i.e. S6, No) in Figure 8. It will therefore be appreciated that steps S10 and S11 are equivalent to the flowchart of Figure 8.

In step S12, similar time/frequency resources and antenna configurations are selected for users A and B in the uplink as adopted in steps S10 and S11 in the downlink, and data is transmitted from those users. Next, in step S13, the zero-forcing is carried out by post-coding transmissions received at $BS_A$ with vector $U_0^H = V_0^T$.

From the above, it will be appreciated that it is possible to implement the present invention for MIMO pre-coding in the downlink alone (as previously described), or to carry out MIMO pre-coding in the downlink together with MIMO post-coding in the uplink (first preferred embodiment). In the present preferred embodiment, significant saving in complexity is afforded by the re-use in the uplink of the estimated channel information in the downlink.

It will of course be appreciated that it is possible to implement the present invention for MIMO post-coding in the uplink alone (hereinafter, the second preferred embodiment). That is, method steps analgous to those set out in Figure 8 may be used to select users A and B and determine the vector $U_0^H$ for use in such post-coding without relying on the downlink equivalent $V_0$ and the relationship $U_0^H = V_0^T$. That is, vector $U_0^H$ may be calculated independently of any downlink calculations. Indeed, in the first preferred embodiment, vector $U_0^H$ may similarly be calculated independently, not taking advantage of the relationship $U_0^H = V_0^T$. This may be useful, for example, if the necessary channel properties for using the relationship $U_0^H = V_0^T$ are not present, for example if the system is an OFDMA-FDD system.

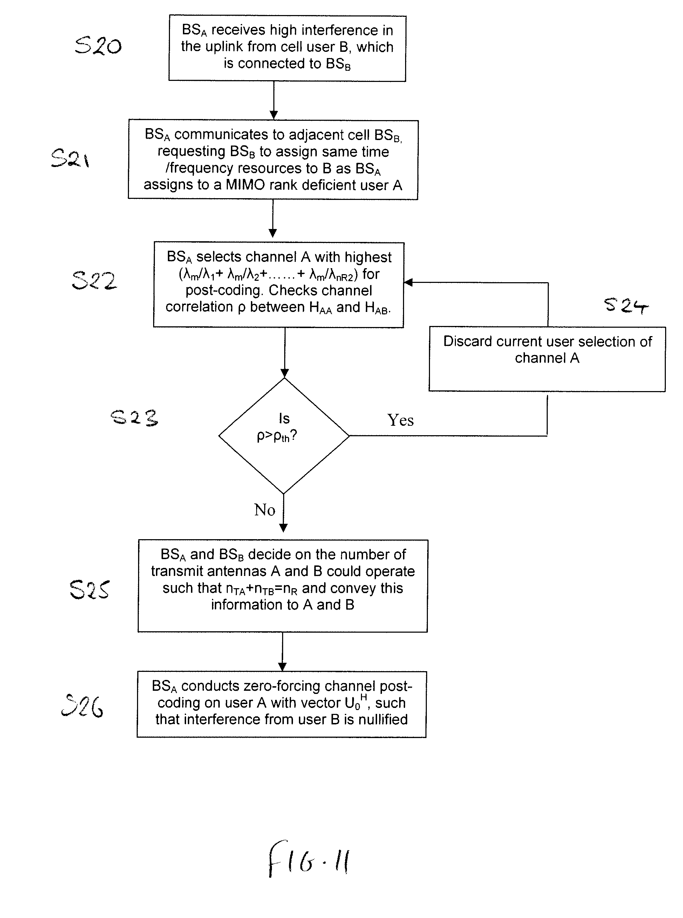

Figure 11 is a flowchart of a method corresponding to the second preferred embodiment of the present invention. This method comprises steps S20 to S26.

In step S20, the base station $BS_A$ receives high interference in uplink transmissions from a user (user B) in an adjacent cell. Typically, user B is connected to, or served from, a base station in its own cell, in this case base station $BS_B$. Next, in step S21, the base station $BS_A$ communicates with the base station $BS_B$ in the adjacent cell requesting that base station to assign the same time/frequency resources to user B as base station $BS_A$ assigned to a MIMO rank-deficient user A. Such communication may be carried out via a backbone network (wired or wireless). If base station $BS_A$ receives high interference from more than one user in an adjacent cell, it may prioritise its activities to deal with the user generating the highest interference first, or it may be capable of dealing with several such users at the same time.

In step S22, the base station $BS_A$ determines which of the users in its cell should be used for post-coding, preferably zero-forcing. To minimise the loss of data capacity over all, as before, a rank-deficient MIMO channel is selected in a similar manner as already mentioned. This involves calculating, for each of its active users (i.e., users in its own cell), an eigenvalue ratio or ratio sum as previously specified. In the present embodiment, the most rank-deficient channel $H_{AA}$ (in this case, determined as the channel with the highest ratio sum as shown in Figure 11) is selected and the correlation between this channel and channel $H_{AB}$ of the cell-edge user B is checked. In the event of too high a correlation, (S23, yes), step S22 is repeated (via step S24) selecting a different rank-deficient channel.

It would of course be appreciated that step S21 may be carried out between steps S23 and S25, at which point user A has been properly identified.

Next, in step S25, the base stations $BS_A$ and $BS_B$ decide on the number of transmit antennas that users A and B operate such that $n_{TA} + n_{TB} = n_R$, and they convey this information to users A and B. Finally, in step S26, the post-coding, preferably zero-forcing, is carried out by base station $BS_A$ on the channel for user A employing vector $U_0^H$, such that interference received from user B is nullified.

It will of course be understood that, whereas in the (downlink) example described in relation to Figure 8 the in-cell user A is selected for pre-coding purposes, in the (uplink) second preferred embodiment the in-cell user A is selected for post-coding purposes. In both cases it is necessary to select both users A and B so that they can be allocated the same time/frequency resources. Then, in the Figure 8 example pre-coding is employed in $BS_A$ on the channel for user A and in the second preferred embodiment post-coding is employed in $BS_A$ on the channel for user A.

Analogously again, it will of course be appreciated that it is possible to implement the present invention for MIMO post-coding in the uplink together with MIMO pre-coding in the downlink (hereinafter, the third preferred embodiment). In the third preferred embodiment, significant saving in complexity is afforded by the re-use in the downlink of the estimated channel information in the uplink, using the relationship $U_0^H = V_0^T$.

Similarly to before, in the third preferred embodiment the vector $V_0$ may be calculated independently, not taking advantage of the vector $U_0^H$ already obtained for the uplink and the relationship $U_0^H = V_0^T$. This may be useful, for example, if the necessary channel properties for using the relationship $U_0^H = V_0^T$ are not present, as mentioned above.

It will of course be appreciated that the first and third preferred embodiments are similar to one another, in that they deal with both the uplink and downlink transmissions. In TDD systems, the relationship $U_0^H = V_0^T$ can be utilized as per the third embodiment. In FDD systems, however, separate feedback is required to determine the post-coding vector $U_0^H$ for $B_{SA}$. In certain circumstances, one of the first and third embodiments may be more preferable than the other.

The alternative methodologies provided above in respect of the Figure 8 example and the first preferred embodiment of course apply analogously to the second and third preferred embodiments. For example, whereas in the second and third preferred embodiments the interference-suffering base station may indicate to the serving base station of the cell-edge subscriber station that it is experiencing interference from that cell-edge subscriber station, it may instead directly communicate with the interfering cell-edge subscriber station. It can be assumed due to the fact that interference is significant, that the base station experiencing interference will be in a position that is in range for communication with this interfering cell-edge subscriber station. The two base stations can then either co-ordinate resource allocation, such that nulling is performed appropriately, or the subscriber station itself can arbitrate between the two BSs to prevent the need for signalling over the backbone network. If the interference-suffering base station communicates to interfering users from multiple cells in this manner, this interference-suffering base station may be able to decide on the k number of spatial modes to be allocated for interference nulling. These alternative methodologies, although feasible technically, utilize valuable radio resources when $BS_A$ tries to communicate directly with user B. Moreover, in a cellular architecture user B is generally sub-ordinate to its own cell site $BS_B$, such that it cannot make decisions on the number of antennas etc. by liasing only with $BS_A$. These alternative methodologies may be considered more applicable to peer-to-peer or adhoc networks than to cellular networks.

Embodiments of the present invention may be implemented in hardware, or as software modules running on one or more processors, or on a combination thereof. That is, those skilled in the art will appreciate that a microprocessor or digital signal processor (DSP) may be used in practice to implement some or all of the functionality described above.

Such a microprocessor or DSP may be present in a base station of a wireless communication system. In a wireless communication system employing relay stations, it will be further preferable for each relay station to include functionality for performing the method according to the present invention. A processor or DSP of each subscriber station may also need adaptation to the method of the present invention, in particular to provide for sending messages to a base station outside its cell where this is required. Moreover, a subscriber station in a peer-to-peer network could itself carry out the method of the present invention.

The invention may also be embodied as one or more device or apparatus programs (e.g. computer programs and computer program products) for carrying out part or all of the methods described herein. Such programs embodying the present invention may be stored on computer-readable media, or could, for example, be in the form of one or more signals. Such signals may be data signals downloadable from an Internet website, or provided on a carrier signal, or in any other form.

The following statements are considered to be useful for forming embodiments of the present invention. For example, features in the below statements may be combined with features in the appended claims to define embodiments of the present invention.

1. A wireless communication method in a MIMO system having a first cell and one or more second cells adjacent to each other, each cell served by a base station and having a plurality of fixed or mobile subscriber stations, the base station having a transmission link to each subscriber station in the cell on a respective MIMO channel, the method comprising the steps of, in the base station of the first cell:

receiving, from a said second cell, a request for reduction of interference to a subscriber station in the second cell caused by transmissions from the base station of the first cell;

identifying a rank deficient MIMO channel among the transmission links from the base station to each subscriber station in the first cell to select a MIMO channel to be made the subject of precoding; and

applying precoding to transmissions on the selected MIMO channel to reduce interference experienced by said subscriber station in the second cell.

2. The wireless communication method according to statement 1 wherein said identifying step selects the most rank deficient MIMO channel as the subject of precoding.

3. The wireless communication method according to statement 2 wherein said identifying step checks the correlation between the most rank deficient MIMO channel and a MIMO channel to said subscriber station in the second cell and if the correlation exceeds a threshold, instead selects the next most rank deficient MIMO channel as the subject of precoding.

4. The wireless communication method according to statement 1, 2 or 3 wherein the receiving step includes receiving time and frequency co-ordinates assigned to said subscriber station in the second cell, and wherein the base station in the first cell assigns the same time and frequency co-ordinates to the selected MIMO channel.

5. The wireless communication method according to any preceding statement wherein the request is received from the base station of the second cell.

6. The wireless communication method according to any of statements 1 to 4 wherein the request is received from said subscriber station in the second cell.

7. The wireless communication method according to any preceding statement wherein the precoding involves zero forcing.

8. The wireless communication method according to any preceding statement wherein said identifying step identifies a rank deficient MIMO channel by finding eigenvalues $\lambda$ of each absolute MIMO channel matrix and measuring the ratio of the largest eigenvalue $\lambda_m$ to the smallest eigenvalue $\lambda_1$.

9. The wireless communication method according to statement 8 wherein the identifying step calculates, for each MIMO channel to subscriber stations in the first cell, the ratio sum:

$$\lambda_m/\lambda_1 + \lambda_m/\lambda_2 + \ldots\ldots + \lambda_m/\lambda_{Nr2}$$

where Nr2 is the number of receive antennas used by said subscriber station in the second cell, and selects the channel with the largest sum for precoding.

10. The wireless communication method according to any of statements 1 to 7 wherein the identifying step calculates, for each MIMO channel to subscriber stations in the first cell, the ratio: $\lambda_m/\lambda_{Nr2}$
where $\lambda_m$ is the largest eigenvalue in the MIMO channel matrix, Nr2 is the number of receive antennas used by said subscriber station in the second cell, and $\lambda_{Nr2}$ is the Nr2-th eigenvalue, and selects the channel with the largest ratio for precoding.

11. The wireless communication method according to any preceding statement wherein a plurality of requests are received from the or each second cell, and the method applies the precoding to reduce interference to a plurality of said users in the second cell simultaneously.

12. The wireless communication method according to statement 11 wherein the identifying and applying steps are repeated for a plurality of MIMO channels among the transmission links from the base station to each subscriber station in the first cell, in order to reduce interference to a plurality of said users in the or each second cell simultaneously.

13. The wireless communication method according to statement 11 wherein the step of applying precoding is conducted on one said selected MIMO channel so as to reduce interference to a plurality of said users in the or each second cell simultaneously.

14. The wireless communication method according to any preceding statement wherein the base station in the first cell exchanges messages with the base station in the second cell to co-ordinate the step of applying precoding.

15. The wireless communication method according to statement 6 wherein said subscriber station in the second cell sends messages to the base stations of the first cell and the second cell to co-ordinate the step of applying precoding.

16. The wireless communication method according to any preceding statement further comprising, following said identifying step, a step of estimating a net capacity effect on said MIMO system of applying the precoding, and proceeding to apply the precoding only if a net capacity benefit is estimated.

17. The wireless communication method according to any preceding statement applied to the downlink of an OFDMA-based wireless communication system.

18. A base station used in a cellular wireless communication system for transmitting data over respective MIMO channels to users in a first cell which is adjacent to one or more other cells, the base station responsive to a request received from outside the first cell for precoding its transmissions to one of the users in the first cell so as to reduce interference caused by said transmissions and experienced by one or more users in the other cells, the base station arranged to select a MIMO channel to one of its users for precoding based on whether correlation exists among constituent subchannels of the MIMO channel.

19. The base station according to statement 18 wherein the precoding is zero forcing.

20. The base station according to statement 18 or 19, further arranged to calculate a net capacity benefit to the first cells and the other cells of performing the precoding, and to ignore the request in the event that no net capacity benefit exists.

21. The base station according to statement 18, 19 or 20 wherein the base station is configured to select a MIMO channel for precoding by searching for rank-deficient MIMO channels among the MIMO channels over which it transmits data to the users in its cell.

22. The base station according to statement 21 wherein the base station is arranged to apply a precoding matrix to the most rank-deficient MIMO channel.

23. The base station according to statement 22 wherein the base station is arranged to identify the most rank-deficient MIMO channel by examining eigenvalues of each MIMO channel matrix.

24. The base station according to any of statements 18 to 23, further configured to check for the existence of correlation between a MIMO channel selected for precoding and each MIMO channel for transmissions to said one or more users in the other cells.

25. The base station according to any of statements 18 to 24 further configured to receive information from a base station or from a said user in at least one of the other cells for use in said precoding.

26. A MIMO wireless communication system made up of a plurality of cells each comprising a base station according to any of statements 18 to 25 and a plurality of subscriber stations served by the base station, each of the subscriber stations configured to detect interference on its downlink from the base station and operable to send a request for interference reduction.

27. The wireless communication system according to statement 26 wherein each subscriber station is arranged to send said request to the base station of its own cell.

28. The wireless communication system according to statement 26 wherein each subscriber station is arranged to send said request to the base station of an another one of said cells.

29. A subscriber station in a MIMO cellular network, having:

a plurality of antennas for receiving MIMO transmissions from a base station of its own cell;
means for detecting interference from a base station in another cell of the network;
means for sending a request for nulling said interference; and
means for adaptively selecting a number of its antennas currently in use according to a request from a base station.

30. Software which, when executed by a processor of a base station in a wireless communication system, provides the base station according to any of statements 18 to 25.

31. Software which, when executed by a processor of a subscriber station in a wireless communication system, provides the subscriber station according to statement 29.

The present application claims priority from GB 0720559.4, which was filed on 19 October 2007. The entire contents of GB 0720559.4 are hereby incorporated herein by reference.

**Claims**

1. A wireless communication method for use in a MIMO system, the system having a first cell adjacent to one or more second cells, each cell being served by a base station and having a plurality of fixed or mobile subscriber stations, and each base station having MIMO channels between its cell and each subscriber station in its cell, the method comprising:

recognising an opportunity for a reduction of interference experienced between a particular subscriber station in a particular said second cell and the base station of the first cell;
selecting as the basis of interference reduction a rank deficient MIMO channel amongst the MIMO channels between the base station of the first cell and each subscriber station in the first cell; and
applying post-coding to transmissions on the selected MIMO channel, where the selected MIMO channel is an uplink channel, or on a MIMO uplink channel corresponding to the selected MIMO channel, where the selected MIMO channel is a downlink channel, to reduce the interference experienced by the base station of the first cell.

2. A wireless communication method as claimed in claim 1, comprising selecting the MIMO channel from amongst the uplink and/or downlink MIMO channels between the base station of the first cell and each subscriber station in the first cell.

3. A wireless communication system as claimed in claim 1 or 2, comprising assessing how rank deficient the various said MIMO channels are, and basing such selection on such assessment.

4. A wireless communication method as claimed in any of the preceding claims, comprising selecting the most rank deficient MIMO channel as the basis of interference reduction.

5. A wireless communication method as claimed in claim 4, further comprising, following such selection, checking the correlation between the most rank deficient MIMO channel and a MIMO channel between the base station of the first cell and the particular subscriber station in the particular second cell, and, if the correlation exceeds a threshold, selecting instead the next most rank deficient MIMO channel as the subject of interference reduction.

6. A wireless communication method as claimed in any of the preceding claims, comprising selecting a rank deficient MIMO channel by finding eigenvalues $\lambda$ of each absolute MIMO channel matrix and measuring the ratio of the largest eigenvalue $\lambda_m$ to the smallest eigenvalue $\lambda_1$.

7. A wireless communication method as claimed in any of the preceding claims, wherein, in the case that the interference is partly experienced in respect of downlink transmissions,:

   the selected channel is a downlink channel; and
   pre-coding is applied to transmissions on that downlink channel to reduce the interference experienced by the particular subscriber station in the particular second cell.

8. A wireless communication method as claimed in claim 7, wherein the method further comprises basing the post-coding applied on the uplink channel corresponding to the selected downlink channel on the pre-coding applied on the selected downlink channel.

9. A wireless communication method as claimed in claim 8, wherein the pre-coding employs a pre-coding vector $V_0$ and the post-coding employs a post-coding vector $U_0^H$, and wherein the method comprises setting vector $U_0^H$ to be the transpose of vector $V_0$.

10. A wireless communication method as claimed in any of claims 1 to 6, wherein the interference is partly experienced in respect of downlink transmissions and wherein the selected channel is an uplink channel, the method further comprising:

    selecting the downlink channel corresponding to the selected uplink channel; and
    applying pre-coding on the selected downlink channel to reduce the interference experienced by the particular subscriber station in the particular second cell.

11. A wireless communication method as claimed in claim 10, wherein the method further comprises basing the pre-coding applied on the selected downlink channel on the post-coding applied on the selected uplink channel.

12. A wireless communication method as claimed in claim 11, wherein the pre-coding employs a pre-coding vector $V_0$ and the post-coding employs a post-coding vector $U_0^H$, and wherein the method comprises setting vector $V_0$ to be the transpose of vector $U_0^H$.

13. A wireless communication method as claimed in any of the preceding claims, further comprising assigning the same time/frequency resources to the post-coded and/or pre-coded MIMO channels as assigned to the corresponding MIMO channel(s) between the base station of the first cell and the particular subscriber station in the particular second cell.

14. A wireless communication method as claimed in any of the preceding claims, wherein the pre-coding and/or post-coding, as the case may be, involves zero-forcing.

15. A base station for use in a first cell of a MIMO system, the system having said first cell adjacent to one or more second cells, each cell being served by such a base station and having a plurality of fixed or mobile subscriber stations, and each such base station having MIMO channels between itself and each subscriber station in its cell, the claimed base station comprising:

    recognition means operable to recognise an opportunity for reduction of interference experienced between a particular subscriber station in a particular said second cell and itself;
    selection means operable to select as the basis of interference reduction a rank deficient MIMO channel amongst the MIMO channels between itself and each subscriber station in its cell; and
    means operable to apply post-coding to transmissions on the selected MIMO channel, where the selected MIMO channel is an uplink channel, or on a MIMO uplink channel corresponding to the selected MIMO channel, where the selected MIMO channel is a downlink channel, to reduce the interference experienced by the claimed base station.

# F I G.　1

F I G. 2

F I G. 3

F I G.   4

EP 2 051 400 A2

FIG. 5

Empirical CDF

F I G. 6

Empirical CDF

non pre-coded capacity

pre-coded capacity with random channel selection

Channel capacity sum (bits/s/Hz)

Probability (capacity < abscissa)

F I G. 7

$S1$ — Cell edge user B indicates high interference to its serving $BS_B$

$S2$ — $BS_B$ communicates to adjacent cell $BS_A$, with the time frequency coordinates of B

$S3$ — $BS_A$ inspects all requests for interference nulling and decides on k spatial modes to be used for zero-forcing, based on net capacity benefit

$S4$ — $BS_A$ calculates $(\lambda_m/\lambda_1 + \lambda_m/\lambda_2 + \ldots\ldots + \lambda_m/\lambda_{nR2})$ for all active users

$S5$ — Selects channel A with highest $(\lambda_m/\lambda_1 + \lambda_m/\lambda_2 + \ldots\ldots + \lambda_m/\lambda_{nR2})$ for pre-coding. Checks channel correlation ρ with B.

$S7$ — Discard current user selection of channel A

$S6$ — Is $\rho > \rho_{th}$?

Yes

No

$S8$ — $BS_A$ conducts zero-forcing channel pre-coding on user A and allocates same time/ frequency coordinates to A as indicated by $BS_B$

FIG. 8

FIG. 9

S10

Select users A/B (from a group of eligible users) and antenna configurations for MIMO pre-coding in DL,
(with BS$_A$, BS$_B$ collaboration)

S11

Assign the same time/ frequency resources for the downlink of A and B in BS$_A$ and BS$_B$ schedulers and transmit data in DL with pre-coding for user A with V$_0$

S12

Assign similar time/ frequency resources for A and B for the uplink and transmit data with the same antenna configurations

S13

Apply post-coding at BS$_A$ for data segement of user A, with vector V$_0^T$

FIG. 10

S20

BS$_A$ receives high interference in the uplink from cell user B, which is connected to BS$_B$

S21

BS$_A$ communicates to adjacent cell BS$_B$, requesting BS$_B$ to assign same time /frequency resources to B as BS$_A$ assigns to a MIMO rank deficient user A

S22

BS$_A$ selects channel A with highest $(\lambda_m/\lambda_1 + \lambda_m/\lambda_2 + \ldots\ldots + \lambda_m/\lambda_{nR2})$ for post-coding. Checks channel correlation $\rho$ between $H_{AA}$ and $H_{AB}$.

S24

Discard current user selection of channel A

S23

Is $\rho > \rho_{th}$?

Yes

No

S25

BS$_A$ and BS$_B$ decide on the number of transmit antennas A and B could operate such that $n_{TA} + n_{TB} = n_R$ and convey this information to A and B

S26

BS$_A$ conducts zero-forcing channel post-coding on user A with vector $U_0^H$, such that interference from user B is nullified

FIG. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 0720559 A

**Non-patent literature cited in the description**

- **Q.H. SPENCER.** Zero forcing Methods for Downlink Spatial Multiplexing in Multiuser MIMO Channels. *IEEE Trans. on Signal Processing,* February 2004, vol. 52 (2